# EUROPEAN PATENT SPECIFICATION

(11) **EP 2 333 146 B1**
(45) Date of publication and mention of the grant of the patent: **27.07.2016**
(21) Application number: 10193224.2
(22) Date of filing: 01.12.2010
(51) Int. Cl.: D06F 39/14

(54) **Drum type washing machine and housing thereof**
Trommelwaschmaschine und Gehäuse dafür
Machine de lavage à tambour et son boîtier

(30) Priority: 08.12.2009 KR 20090121241
(43) Date of publication of application: 15.06.2011
(73) Proprietor: Samsung Electronics Co., Ltd., Suwon-si, Gyeonggi-do, 443-742 (KR)
(72) Inventor: Sung, Jong Hun, Gyeonggi-do (KR)
(74) Representative: Grünecker Patent- und Rechtsanwälte PartG mbB

(56) References cited:
- EP-A1- 1 972 715
- DE-A1-102009 002 776
- US-A1- 2009 167 126

## Description

### BACKGROUND

### 1. Field

Embodiments relate to a drum type washing machine having a locking device to maintain a state in which a door to open and close an introduction port is closed and a housing thereof.

### 2. Description of the Related Art

Generally, a drum type washing machine is an apparatus that repeatedly performs washing and rinsing cycles to wash laundry. The laundry is lifted and dropped, with the result that the laundry is washed.

The drum type washing machine includes a housing forming the external appearance thereof, the housing having an introduction port through which laundry is introduced, a water tub mounted in the housing in a suspended manner to contain wash water, a cylindrical rotary tub rotatably mounted in the water tub such that a shaft of the rotary tub is disposed in a frontward-and-backward direction to receive laundry, and a door hingedly coupled to the housing at one side of the introduction port to open and close the introduction port.

In the drum type washing machine, the door is installed at the front of the water tub, with the result that, when the door is opened in a state in which the water tub is filled with wash water, the wash water may pour out through the introduction port. For this reason, the drum type washing machine has a locking device to maintain a state in which the introduction port is closed by the door when wash water is contained in the drum type washing machine. Correspondingly, the door has a locking member configured to be locked by the locking device.

EP 1 972 715 A1 discloses a drum type washing type washing machine with a loading chamber that can be closed by a hinged lid. A corresponding introduction port can be closed by the lid and this comprises a locking latch as a locking member and a counterpart is provided at the housing. The locking device has a first through hole with tapered flanges and a stop element surrounds the through hole. The front panel further comprises a hole which corresponds to the first hole. The first hole has a perimeter from which the first support extends.

### SUMMARY

It is an object of the present invention to provide a drum type washing machine that is prevented from being damaged due to impact which may be generated during transportation.

Additional aspects will be set forth in part in the description which follows and, in part, will be apparent from the description, or may be learned by practice of the invention.

This object is solved by the features of claim 1. Advantageous embodiments are disclosed by the subclaims.

The second support may integrally extend from a front panel forming the front of the housing.

The first through hole and the second through hole may be formed in a quadrangular shape, and the first support may have a sectional form of a quadrangular ring having an outside corresponding to the inside of the second through hole.

The second support may have a sectional form of a quadrangular ring having an inside corresponding to the outside of the first support.

The second support may be formed in a shape corresponding to a lower part of the outside of the first support to support the lower part of the outside of the first support.

In accordance with another aspect, a housing of a drum type washing machine includes a second through hole, through which a first support, having a first through hole provided therein, formed at a locking device is inserted, and a second support extending from the perimeter of the second through hole to support the outside of the first support in a plane contact state.

The outside of the first support may be formed in a quadrangular shape, and the second support may have a sectional form of a quadrangular ring having an inside corresponding to the outside of the first support.

The second support may be formed in a shape corresponding to a lower part of the first support to support the lower part of the first support.

### BRIEF DESCRIPTION OF THE DRAWINGS

These and/or other aspects will become apparent and more readily appreciated from the following description of the embodiments, taken in conjunction with the accompanying drawings of which:
FIG. 1 is a perspective view illustrating a drum type washing machine according to an embodiment;
FIG. 2 is a perspective view illustrating a locking device and a locking member according to an embodiment;
FIG. 3 is an enlarged view of the locking device and the locking member;
FIG. 4 is a sectional view illustrating the coupling between the locking device and the locking member; and
FIG. 5 is a perspective view illustrating a locking device and a locking member according to another embodiment.

### DETAILED DESCRIPTION

Reference will now be made in detail to the embodiments, examples of which are illustrated in the accompanying drawings, wherein like reference numerals refer to like elements throughout.

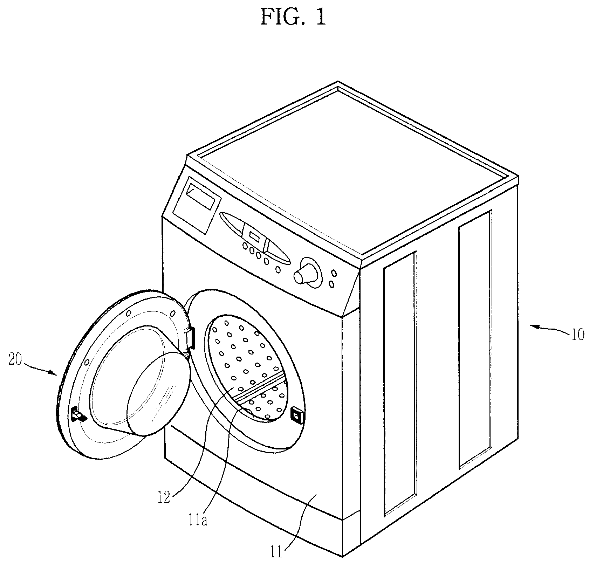

As shown in FIG. 1, a drum type washing machine according to an embodiment includes a housing 10 forming the external appearance thereof, a water tub (not shown) mounted in the housing 10 in a suspended manner to contain water, and a rotary tub 12 rotatably mounted in the water tub. With the rotation of the rotary tub 12, laundry in the rotary tub 12 is lifted and dropped, with the result that the laundry is washed.

A front panel 11 forming the front of the housing 10 has an introduction port 11 a through which laundry is introduced into the rotary tub 12. The introduction port 11 a is opened and closed by a door 20. One side of the door 20 is hingedly coupled to the front panel 11 at one side of the introduction port 11a.

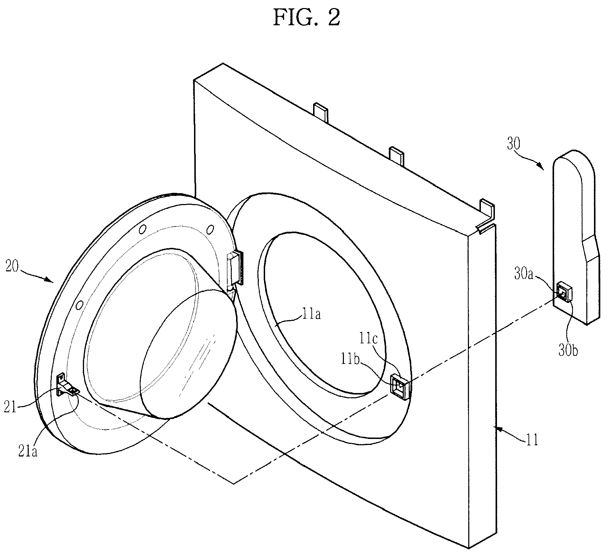

As shown in FIG. 2, a locking member 21 protrudes backward from the rear of the door 20 at the other side of the door 20 to maintain a state in which the introduction port 11 a is closed by the door 20. A locking device 30 is mounted at the rear of the front panel 11 of the housing 10 to lock the locking member 21 such that the state in which the introduction port 11 a is closed by the door 20 is maintained.

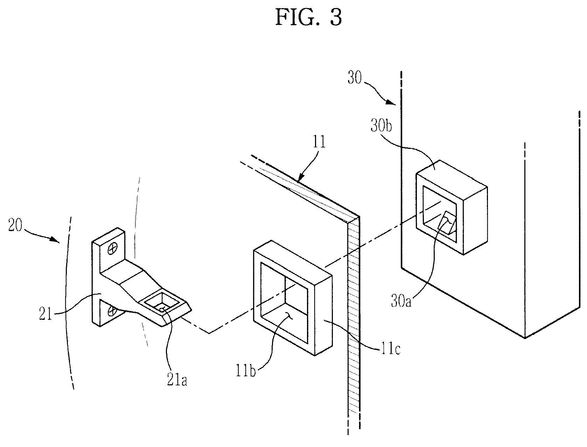

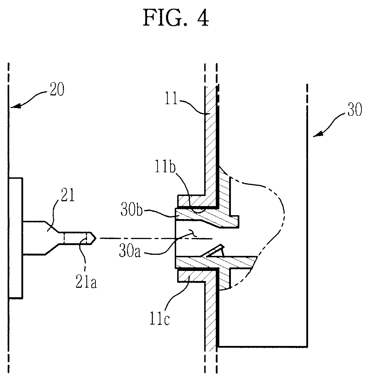

As shown in FIGS. 3 and 4, the locking member 21 is provided at the rear end thereof with a locking hole 21 a, by which the locking device 30 is locked. When the rear end of the locking member 21 is inserted into the locking device 30, a hook (not shown) of the locking device 30 is locked in the locking hole 21 a.

The locking device 30 is provided at the front thereof with a first through hole 30a, through which the rear end of the locking member 21 is inserted into the locking device 30. In the front panel 11 at the other side of the introduction port 11 a is formed a second through hole 11 b, through which the locking member 21 is inserted into the locking device 30.

The first through hole 30a and the second through hole 11 b are located at exactly corresponding positions such that the rear end of the locking member 21 is inserted into the locking device 30 through the first through hole 30a and the second through hole 11 b. To this end, the locking device 30 has a first support 30b integrally extending from the perimeter of the first through hole 30a such that the first support 30b is supported by the inside of the second through hole 11 b. The outside of the first support 30b corresponds to the inside of the second through hole 11 b to maintain a state in which the first through hole 30a and the second through hole 11 b are located at the corresponding positions. Therefore, the outside of the first support 30b is supported by the inside of the second through hole 11 b.

The first support 30b may have a protruding length equal to the thickness of the front panel 11. Since the front panel 11 is made of a thin iron plate, however, the first support 30b may be separated from the second through hole 11 b when external impact is applied to the drum type washing machine during transportation or installation. For this reason, the first support 20b protrudes frontward through the second through hole 11 b in order to stably maintain a state in which first support 30b is supported by the inside of the second through hole 11 b.

Also, the front panel 11 of the housing 10 has a second support 11c integrally extending from the perimeter of the second through hole 11 b to prevent the first support 30b from being damaged due to local concentration of external impact on the first support 30b when the external impact is applied to the drum type washing machine. The inside of the second support 11c corresponds to the outside of the first support 30b such that the inside of the second support 11c is in plane contact with the outside of the first support 30b. If external impact is applied to the drum type washing machine, therefore, the external impact is dispersed on the outside of the first support 30b by the second support 11c, thereby preventing damage to the first support 30b.

In this embodiment, the first through hole 30a and the second through hole 11 b are formed in a quadrangular shape. Correspondingly, the first support 30b is formed in the shape of a quadrangular ring, the outside of which corresponds to the inside of the second through hole 11 b, and the second support 11c is formed in the shape of a quadrangular ring, the inside of which corresponds to the outside of the first support 30b.

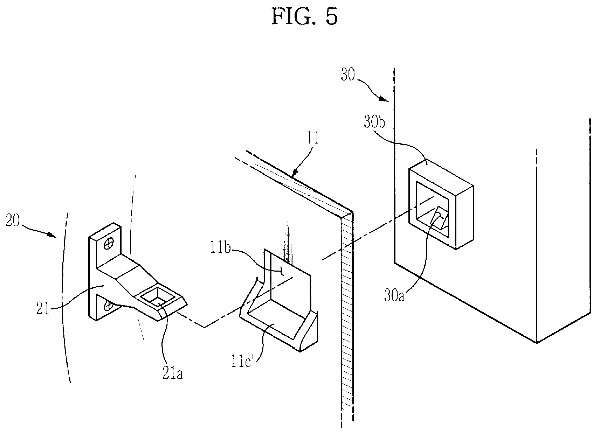

However, the structure of the second support 11c is not limited to the above embodiment. As shown in FIG. 5, for example, a second support 11c' may be formed in a shape corresponding to a lower part of the outside of the first support 30b to restrictively support the outside of the first support 30b. The lower part of the first support 30b may be supported by the second support 11c' since impact generated during transportation is mainly applied to the lower part of the second support 11c'.

As is apparent from the above description, the first support of the locking device is supported by the second support in a plane contact state. Although impact is applied to the drum type washing machine, therefore, such impact is dispersed on the first support, thereby preventing damage to the first support.

Although a few embodiments have been shown and described, it would be appreciated by those skilled in the art that changes may be made in these embodiments without departing from the principles of the invention, the scope of which is defined in the claims and their equivalents.

## Claims

1. A drum type washing machine comprising a housing (10) having an introduction port (11 a), a door (20) to open and close the introduction port (11 a), a locking member (21) provided at the door (20), a locking device (30) provided at the housing (10) to lock the locking member (21), a first through hole (30a) formed in the locking device, a second through hole formed in the housing such that the second through hole corresponds to the first through hole, and a first support (30b) extending from a perimeter of the first through hole (30a) such that the first support is supported by an inside of the first through hole, **characterized by** a second support (11c, 11c') extending from a perimeter of the second through hole (11b) to support an outside of the first support in a plane contact state.

2. The drum type washing machine according to claim 1, wherein the second support (11c, 11c') integrally extends from a front panel (11) forming a front of the housing (10).

3. The drum type washing machine according to claim 1, wherein the first through hole (30a) and the second through hole (11b) are formed in a quadrangular shape, and the first support (30b) has a sectional form of a quadrangular ring having an outside corresponding to an inside of the second through hole (11 b).

4. The drum type washing machine according to claim 3, wherein the second support (11c) has a sectional form of a quadrangular ring having an inside corresponding to the outside of the first support (30b).

5. The drum type washing machine according to claim 3, wherein the second support (11c') is formed in a shape corresponding to a lower part of the outside of the first support (30b) to support the lower part of the outside of the first support.

## Patentansprüche

1. Eine Waschmaschine vom Trommeltyp mit einem Gehäuse (10), welches eine Befüllluke (11a), eine Tür (20) zum Öffnen und Schließen der Befüllluke (11 a), ein Schließbauteil (21) vorgesehen an der Tür (20), eine Schließeinrichtung (30) vorgesehen an dem Gehäuse (10) zum Schließen des Schließbauteils (21), ein erstes Durchgangsloch (30a) gebildet in der Schließeinrichtung (30), ein zweites Durchgangsloch (11 b) gebildet in dem Gehäuse (10), so dass das zweite Durchgangsloch mit dem ersten Durchgangsloch korrespondiert, und ein erstes Stützteil (30b) aufweist, welches sich von einem Umfang des ersten Durchgangsloches (30a) so erstreckt, dass das erste Stützteil (30b) sich auf einer Innenseite des ersten Durchgangsloches (30a) abstützt, **gekennzeichnet durch** ein zweites Stützteil (11 c, 11c'), welches sich von einem Umfang des zweiten Durchgangsloches (11 b) erstreckt, um eine Außenseite des ersten Stützteils in einem ebenen Kontaktzustand abzustützen.

2. Waschmaschine vom Trommeltyp nach Anspruch 1, wobei das zweite Stützteil (11c, 11c') sich einteilig von einem Frontpaneel (11) erstreckt, welches eine Vorderseite des Gehäuses (10) bildet.

3. Waschmaschine vom Trommeltyp nach Anspruch 1, wobei das erste Durchgangsloch (30a) und das zweite Durchgangsloch (11b) eine viereckige Form aufweisen und das erste Stützteil (30b) im Schnitt die Form eines viereckigen Ringes aufweist, welcher eine Außenseite entsprechend zu einer Innenseite des zweiten Durchgangsloches (11 b) aufweist.

4. Waschmaschine vom Trommeltyp nach Anspruch 3, wobei das zweite Stützteil (11c) eine Querschnittsform eines viereckigen Ringes aufweist, welcher eine Innenseite entsprechend zur Außenseite des ersten Stützteils (30b) aufweist.

5. Waschmaschine vom Trommeltyp nach Anspruch 3, wobei das zweite Stützteil (11c') in einer Form ausgebildet ist, die einem unteren Teil der Außenseite des ersten Stützteils (30b) entspricht um das untere Teil der Außenseite des ersten Stützteils abzustützen.

## Revendications

1. Machine à laver du type à tambour comprenant une caisse (10) et ayant un orifice d'introduction (11a), une porte (20) pour ouvrir et fermer l'orifice d'introduction (11a), un élément de verrouillage (21) pourvu sur la porte (20), un dispositif de verrouillage (30) pourvu sur la caisse (10) pour verrouiller l'élément de verrouillage (21), un premier trou traversant (30a) formé dans le dispositif de verrouillage, un deuxième trou traversant formé dans la caisse de manière à ce que le deuxième trou traversant corresponde au premier trou traversant, et un premier support (30b) qui s'étend depuis le périmètre du premier trou traversant (30a) de manière à ce que le premier support soit supporté par l'intérieur du premier trou traversant, **caractérisé par** un deuxième support (11c, 11c') qui s'étend depuis le périmètre du deuxième trou traversant (11b) pour supporter l'extérieur du premier support dans un état de contact plan.

2. Machine à laver du type à tambour selon la revendication 1, dans laquelle le deuxième support (11c, 11c') s'étend intégralement depuis un panneau avant (11) formant l'avant de la caisse (10).

3. Machine à laver du type à tambour selon la revendication 1, dans laquelle le premier trou traversant (30a) et le deuxième trou traversant (11b) sont conformés selon une forme quadrangulaire, et le premier support (30b) présente une forme en section d'anneau quadrangulaire dont l'extérieur correspond à l'intérieur du deuxième trou traversant (11b).

4. Machine à laver du type à tambour selon la revendication 3, dans laquelle le deuxième support (11c) présente une forme en section d'anneau quadrangulaire dont l'intérieur correspond à l'extérieur du premier support (30b).

5. Machine à laver du type à tambour selon la revendication 3, dans laquelle le deuxième support (11c') est conformé selon une forme correspondant à une partie inférieure de l'extérieur du premier support (30b) pour supporter la partie inférieure de l'extérieur du premier support.
